# EUROPEAN PATENT SPECIFICATION

(11) **EP 2 654 102 B1**
(45) Date of publication and mention of the grant of the patent: **17.10.2018**
(21) Application number: 13162933.9
(22) Date of filing: 09.04.2013
(51) Int. Cl.: H01M 2/10, H01M 2/02, H01M 10/04, H01M 2/20, H01M 2/30, H01M 10/052

(54) **Battery stack**
Stapelbatterie
Empilement de batterie

(30) Priority: 18.04.2012 JP 2012094883
(43) Date of publication of application: 23.10.2013
(73) Proprietor: Maxell Holdings, Ltd., Kyoto 618-8525 (JP)
(72) Inventor: Morisaki, Rie, Ibaraki-shi, Osaka 567-8567 (JP); Miyagawa, Yukinori, Ibaraki-shi, Osaka 567-8567 (JP); Tanaka, Masatoshi, Ibaraki-shi, Osaka 567-8567 (JP)
(74) Representative: Diehl & Partner GbR

(56) References cited:
- EP-A1- 1 583 167
- EP-A1- 2 413 397
- JP-A- 2003 323 883
- JP-A- 2009 146 795

## Description

The present invention relates to a battery stack in which a plurality of laminar batteries are stacked.

Non-aqueous electrolyte batteries as typified by lithium ion secondary batteries have high energy density, and therefore they are used as power sources for various moving devices such as automobiles and motorbikes, portable personal digital assistant devices, and uninterruptible power supply (UPS) apparatuses. For such applications, in order to further improve energy density, laminate type lithium ion secondary batteries in which a power generation element is sheathed with a flexible laminate sheet are often used. Furthermore, in order to obtain a desired battery capacity, battery stacks in which a plurality of laminar secondary batteries (battery cells) are stacked via insulating sheets therebetween and connected in series are also in practical use (see, for example, Japanese Patent No. 4499977).

A battery stack is accommodated in a container having an accommodation space surrounded by an inner wall having a substantially rectangular solid shape, before use. If, in this state, an impact is applied to the container by being dropped, or vibrations are applied to the container while it is moved, a situation can occur in which the battery cells accommodated in the container collide with the internal wall of the container. As a result, the battery may be deformed, and in the worst case, an accident can occur, such as ignition or explosion of the battery cells.
Document EP 1 583 167 A1 discloses a battery frame which has a conductive member and an insulating member which are sandwiched between electrode tabs of flat cells stacked when a battery is formed, the conductive member electrically connecting the flat cells to each other and the insulating members electrically insulating the flat cells from each other. A holding member holds the conductive members and the insulating members so that the members can swing in the stacking direction, wherein the holding member is provided in an electrode supporting portion supporting each of the electrode tabs of the flat cells. Document EP 2 413 397 A1 discloses a battery stack comprising a plurality of battery cells, each battery cell is fixed by a double-sided adhesive foil to a plate. Only one side of the battery cell is fixed by an adhesive to allow the battery cell to "breath" during charge and discharge.

The present invention has been made to solve the problems encountered with conventional technology and it is an object of the present invention to provide a battery stack having improved safety by reducing, with a simple method, the possibility that an external force will be applied directly to the battery cells.

A battery stack according to claim 1 is a battery stack in which a plurality of laminar battery cells and a plurality of plates are alternately disposed and stacked one on top of another. Each of the plurality of battery cells is fixed to an adjacent plate. When the battery stack is viewed in a stacked direction, a rectangle with a minimum area internally including the plate also internally includes the battery cell having a positive electrode tab and a negative electrode tab that are drawn out from the battery cell.

These and other advantages of the present invention will become apparent to those skilled in the art upon reading and understanding the following detailed description with reference to the accompanying figures.
FIG. 1A is a perspective view of a battery cell constituting a battery stack according to the present invention, as viewed from the front surface side.
FIG. 1B is a perspective view of the same, as viewed from the back surface side.
FIG. 2 is a perspective view of a battery stack according to an embodiment of the present invention.
FIG. 3 is an exploded perspective view illustrating a stack configuration of the battery stack according to an embodiment of the present invention.
FIG. 4 is a front view of the battery stack according to an embodiment of the present invention
FIG. 5 is a perspective view of another battery cell constituting a battery stack according to the present invention, as viewed from the front surface side.
FIG. 6A is a front view of another plate having a battery cell fixed thereto in a battery stack according to the present invention.
FIG. 6B is a front view of still another plate having a battery cell fixed thereto in a battery stack according to the present invention.
FIG. 7A is an exploded perspective view illustrating a stack configuration of a battery stack according to another embodiment of the present invention.
FIG. 7B is a front view of the battery stack shown in FIG. 7A.

According to the present invention, it is possible to prevent the battery cells from colliding directly with the inner wall of the container containing the battery stack even if an impact or vibrations are applied to the container. As a result, the possibility that the battery cells will be deformed by such collision or that the battery cells will ignite or explode is reduced. Therefore, according to the present invention, it is possible to provide a battery stack whose safety is improved with a simple method.

In the above-described battery stack according to the present invention, in order to allow the positive electrode tab and the negative electrode tab to be electrically connected between adjacent battery cells, a cut-out is formed in a region of the plate to which the positive electrode tab and/or the negative electrode tab are/is opposed. With this configuration, a plurality of battery cells can be easily connected in series without causing the positive electrode tab and the negative electrode tab that are drawn out from the battery cell to extend beyond the rectangle with the minimum area internally including the plate.

In the above-described battery stack according to the present invention, it is preferable that each side of the rectangle with the minimum area internally including the plate extends 1 mm or more from the battery cell including the positive electrode tab and the negative electrode tab. With this configuration, the safety of the battery stack can be further improved.

Hereinafter, the present invention will be described in detail by way of preferred embodiments. It is to be noted, however, that the present invention is not limited to the following embodiments. In the drawings referred to in the following description, for ease of description, only the principal members required in order to describe the present invention are shown in a simplified form, among the constituent members of the embodiments of the present invention. Accordingly, the present invention may include arbitrary constituent members that are not shown in the drawings referred to hereinafter. Also, the dimensions of constituent members and the dimensional proportions of the members in the drawings are not intended to faithfully represent the actual dimensions of the constituent members and the dimensional proportions of the members.

### (Battery Cell)

First, an overall configuration of a battery cell for use in a battery stack according to the present invention will be described.

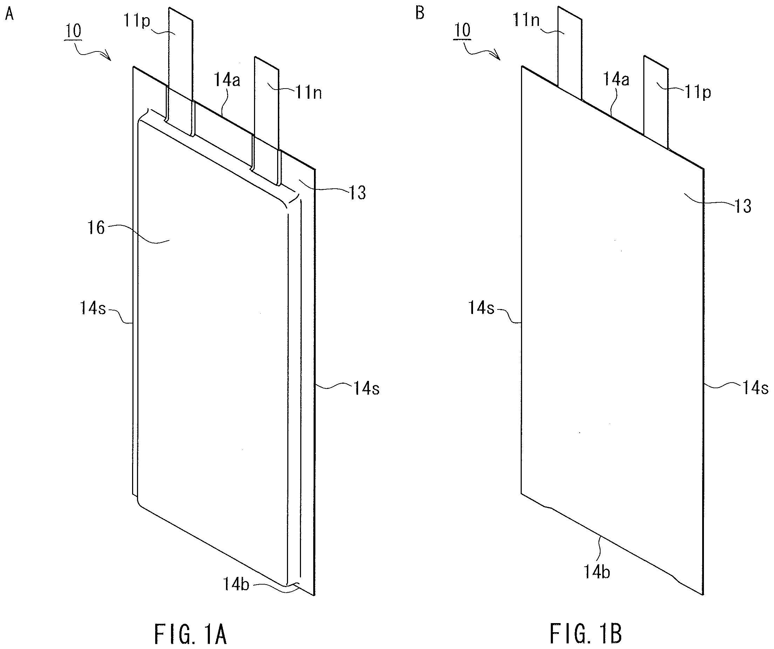

FIG. 1A is a perspective view of a battery cell 10 constituting a battery stack according to the present invention, as viewed from the front surface side. FIG. 1B is a perspective view of the same, as viewed from the back surface side. The battery cell 10 has a substantially rectangular shape in a plan view, and has a laminar shape that is thin relative to the lengthwise and widthwise dimensions of the rectangular shape. In the battery cell 10, a laminar power generation element (not shown) having a rectangular shape in a plan view is enclosed in an outer sheath made of a laminate sheet 13, together with an electrolyte. The power generation element is an electrode stack having positive electrodes and negative electrodes that are alternately stacked one on top of the other with separators interposed therebetween, the positive electrode having a positive electrode material mixture layer containing a positive electrode active material applied and formed on a predetermined region on each surface of a positive electrode current collector, and the negative electrode having a negative electrode material mixture layer containing a negative electrode active material applied and formed on a predetermined region on each surface of a negative electrode current collector. There is no particular limitation on the type of battery, but the type of battery can be secondary battery, and preferably lithium ion secondary battery.

The laminate sheet 13 is thinner than the power generation element and is flexible. The laminate sheet 13 may be, for example, a flexible multilayer sheet in which a heat sealing resin layer (for example, modified polyolefin layer) is laminated on the surface, of a base layer made of aluminum or the like, that opposes the power generation element. A single rectangular laminate sheet 13 is folded in two along a lower end (one of the short sides) 14b so as to sandwich the power generation element, and put together and sealed along the other three sides except for the lower end 14b by heat sealing method or the like.

A positive electrode tab 11p and a negative electrode tab 11n are drawn out from an upper end (the other short side) 14a that opposes the lower end 14b. The positive electrode tab 11p and the negative electrode tab 11n have a strip shape and extend in a direction perpendicular to the upper end 14a (in other words, the direction parallel to a pair of side ends (long sides) 14s that are adjacent to the upper end 14a). The positive electrode tab 11p is made of, for example, an aluminum sheet, and is electrically connected to a plurality of positive electrode current collectors (not shown) constituting the power generation element. Likewise, the negative electrode tab 11n is made of, for example, a copper sheet, a copper sheet plated with nickel, a copper-nickel clad material or the like, and is electrically connected to a plurality of negative electrode current collectors (not shown) constituting the power generation element.

As shown in FIG. 1A, on the front surface side of the battery cell 10, a rectangular region 16 corresponding to the power generation element is protruded from the sealed region of the laminate sheet 13 along three sides 14a, 14s, and 14s of the battery cell 10. On the other hand, as shown in FIG. 1B, the back surface of the battery cell 10 is a substantially flat surface. In the present invention, for ease of description, the surface shown in FIG. 1A on which the rectangular protruding region 16 is formed by the power generation element is referred to as the "front surface" of the battery cell 10, and the surface shown in FIG. 1B that is substantially flat is referred to as the "back surface" of the battery cell 10.

### (Battery Stack)

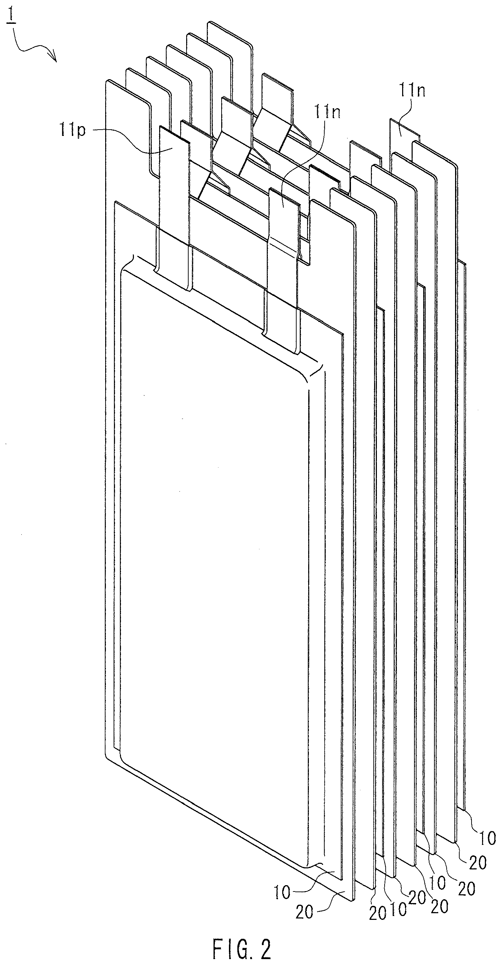

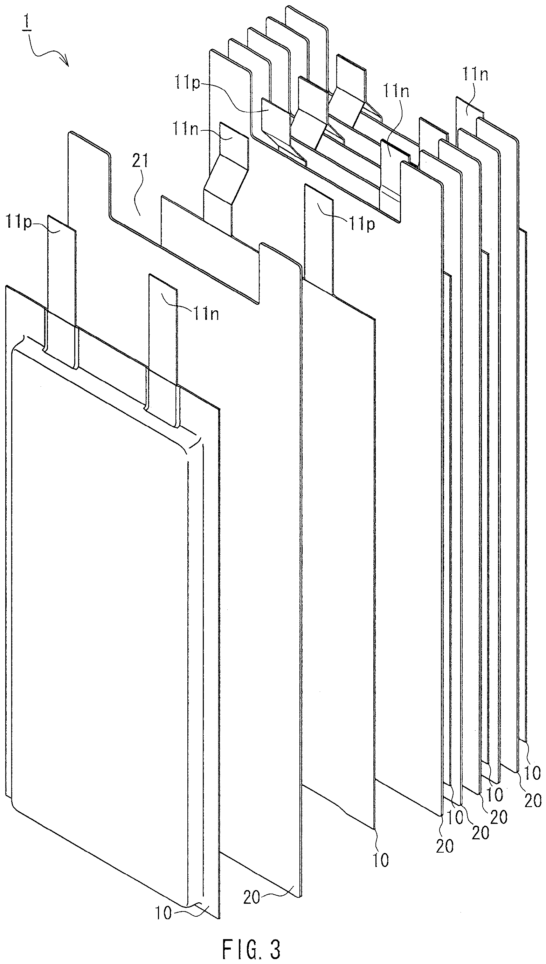

FIG. 2 is a perspective view of a battery stack 1 according to an embodiment of the present invention, and FIG. 3 is an exploded perspective view illustrating a stack configuration of the battery stack 1. As shown in FIGS. 2 and 3, a plurality of (seven in this example) battery cells 10 and a plurality of (six in this example) plates 20 are alternately disposed and stacked one on top of the other. The plurality of battery cells 10 constituting the battery stack 1 have the same shape, and the plurality of plates 20 constituting the battery stack 1 have the same shape. In the present invention, the direction in which the battery cells 10 and the plates 20 are alternately stacked will be referred to as the "stacked direction".

Each plate 20 has a substantially rectangular shape as a whole. In FIGS. 2 and 3, a cut-out 21 is formed on the upper short side of the plate 20, in a portion other than both ends of the short side, and as a result, a substantially U-shaped edge is formed on the upper side of the plate 20. The plate 20 is made of a hard material that can be regarded as a substantially rigid body. Preferable examples include insulating resin materials such as polycarbonate, and metal materials having excellent thermal conductivity such as copper and aluminum. The plate 20 preferably has, although depending on the material of the plate 20, a thickness of 0.3 mm or more, more preferably 0.5 mm or more, and particularly preferably 0.8 mm or more. The upper limit for the thickness of the plate 20 can be set as appropriate taking into consideration the entire thickness of the battery stack 1, or the like, and is preferably 1.5 mm or less, and more preferably 1.2 mm or less.

Every other battery cell 10 is flipped over so that tabs of different polarities (namely, the positive electrode tab 11p and the negative electrode tab 11n) oppose each other in the stacked direction between two battery cells 10 that are adjacent to each other with a plate 20 interposed therebetween. Thus, the opposing positive electrode tab 11p and negative electrode tab 11n are electrically connected via the cut-out 21 formed in the plate 20 between the battery cells 10 that are adjacent to each other with the plate 20 interposed therebetween. As a result, a plurality of battery cells 10 are connected in series.

Each battery cell 10 is fixed to an adjacent plate 20. Accordingly, a plurality of battery cells 10 and a plurality of plates 20 are integrated into one piece. There is no particular limitation on the fixing method, and it is possible to fix a battery cell 10 to plates 20 by placing a double-sided adhesive tape or adhesive between the front surface of the battery cell 10 and a plate 20 and between the back surface of the battery cell 10 and a plate 20. Particularly, the fixing method using a double-sided adhesive tape is applied because the stacking step of the battery stack 1 can be performed easily and rapidly.

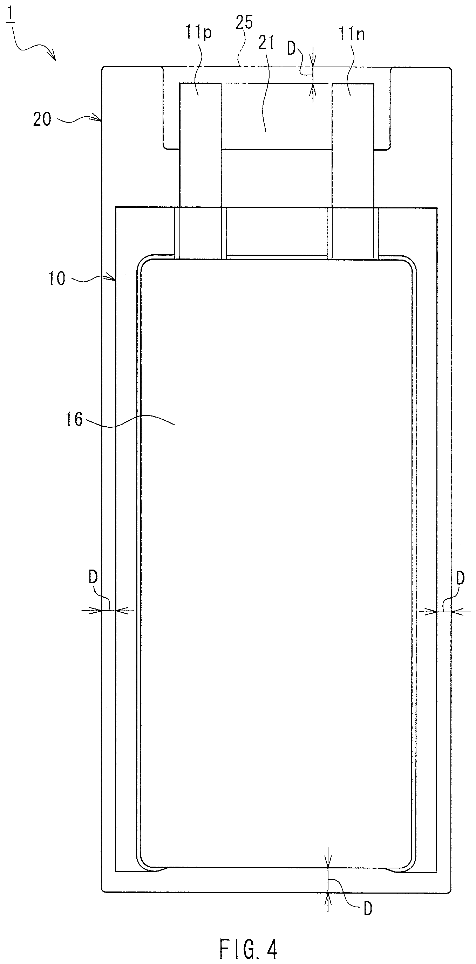

FIG. 4 is a plan view of the battery stack 1, as viewed in the stacked direction. All of the plates 20 constituting the battery stack 1 are positioned such that their projected shapes projected in the stacked direction substantially match with each other.

In FIG. 4, a double-dot-dash line 25 indicates a rectangle with the minimum area internally including the plate 20. Hereinafter, the rectangle indicated by the double-dot-dash line 25 will be referred to as the "contouring rectangle" of the plate 20. In the present embodiment, the contouring rectangle 25 matches the outline of the plate 20, except for the portion where the cut-out 21 is formed. As shown in FIG. 4, the battery cell 10 is internally included in the contouring rectangle 25, together with the positive electrode tab 11p and the negative electrode tab 11n. That is, no parts of the battery cell 10 extend outside beyond the contouring rectangle 25 of the plate 20.

The battery stack 1 of the present embodiment described above is generally accommodated in a container having a space (accommodation space) surrounded by the inner wall having a substantially rectangular solid shape, before use.

Effects of the battery stack 1 of the present invention configured in the above manner will be described.

As described above, in the battery stack 1 of the present invention, each battery cell 10 is fixed to a plate 20. Then, as viewed in the stacked direction, the contouring rectangle 25 of the plate 20 internally includes the battery cell 10 fixed to the plate 20. Accordingly, even if the battery stack 1 moves in a direction perpendicular to the stacked direction within the container as a result of the container containing the battery stack 1 being dropped or vibrated, the plate 20 prevents the battery cell 10 from colliding directly with the inner wall of the container. In this manner, the possibility of an external force being applied directly to the battery cells 10 is reduced, and therefore the possibility of deformation of the battery cells 10 as well as ignition and explosion of the battery cells 10 caused by the deformation can be reduced.

In addition, according to the present invention, the safety of the battery stack 1 can be improved with a very simple method of fixing a battery cell 10 to a plate 20 having a size that internally includes the battery cell 10.

In order to more reliably reduce the possibility of collision of the battery cells 10 with the inner wall of the container, as shown in FIG. 4, it is preferable that the amount D of extension from the battery cell 10 to each side of the contouring rectangle 25 of the plate 20 is large (in other words, the amount of recession of the battery cell 10 from each side of the contouring rectangle 25). The amount D of extension can be set as appropriate according to the strength of the plate 20, or the like. Generally, the amount D of extension is preferably 1 mm or more, more preferably 1.5 mm or more, and particularly preferably 2 mm or more. However, if the amount D of extension is too large, not only further improvement in the safety of the battery stack 1 is not obtained, but also the outer dimensions of the battery stack 1 become large. Generally, the amount D of extension is preferably 4 mm or less, and more preferably 3 mm or less. The amount D of extension to each side of the contouring rectangle 25 may be the same or different.

In FIG. 2, the battery cells 10 disposed on the opposite outer sides in the stacked direction are exposed in the stacked direction, and thus there is a possibility that these battery cells 10 will collide with the inner wall of the container. However, by setting the dimension in the stacked direction of the battery stack 1 to be substantially the same as the inner dimension in the same direction of the container, or by fixing additional plates 20 on the opposite outer sides in the stacked direction, it is possible to reduce the possibility of the occurrence of detrimental deformation caused by the battery cells 10 disposed on the opposite outer sides in the stacked direction colliding directly with the inner wall of the container.

The embodiment described above is merely an example. The present invention is not limited to the above embodiment and can be modified as appropriate.

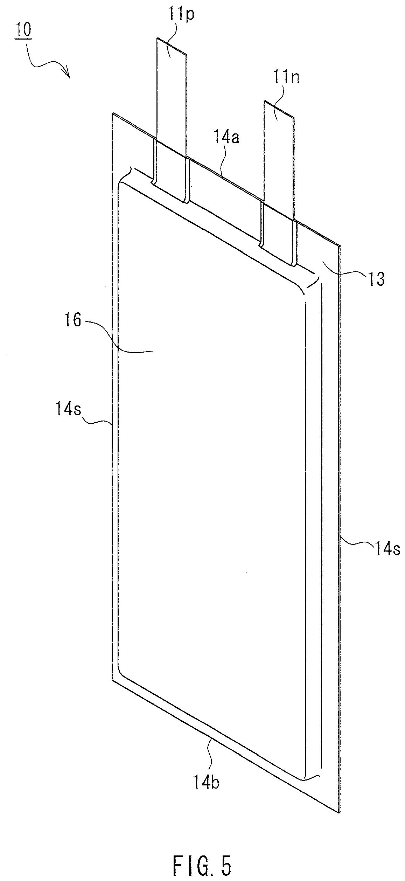

The battery cells 10 of the present invention are not limited to the configuration illustrated in FIGS. 1A and 1B, and may be arbitrary thin battery cells. For example, the battery cell 10 described above is a three-side sealed type battery cell in which a single laminate sheet 13 is folded in two along the lower end 14b, and the laminate sheet 13 is sealed along the three sides except for the lower end 14b, but it may be a four-side sealed type battery cell 10 as shown in FIG. 5 in which the power generation element is sandwiched by two rectangular laminate sheets 13 having the same size and sealing is performed along the four sides including the lower end 14b.

In the battery cell 10 described above, the positive electrode tab 11p and the negative electrode tab 11n are drawn out from the common short side 14a, but the positive electrode tab 11p and the negative electrode tab 11n may be drawn out from either one of a pair of side ends (long sides) 14s. Alternatively, the positive electrode tab 11p and the negative electrode tab 11n may be respectively drawn out from different sides. The size of a plate 20 is set such that the contouring rectangle 25 of the plate 20 internally includes the battery cell 10 including the positive electrode tab 11p and the negative electrode tab 11n, regardless of the drawn-out position of the positive electrode tab 11p and the negative electrode tab 11n. Also, it is preferable that a cut-out is formed in a region of the plate 20 that opposes the positive electrode tab 11p and the negative electrode tab 11n, so that the positive electrode tab 11p and the negative electrode tab 11n can be electrically connected between adjacent battery cells.

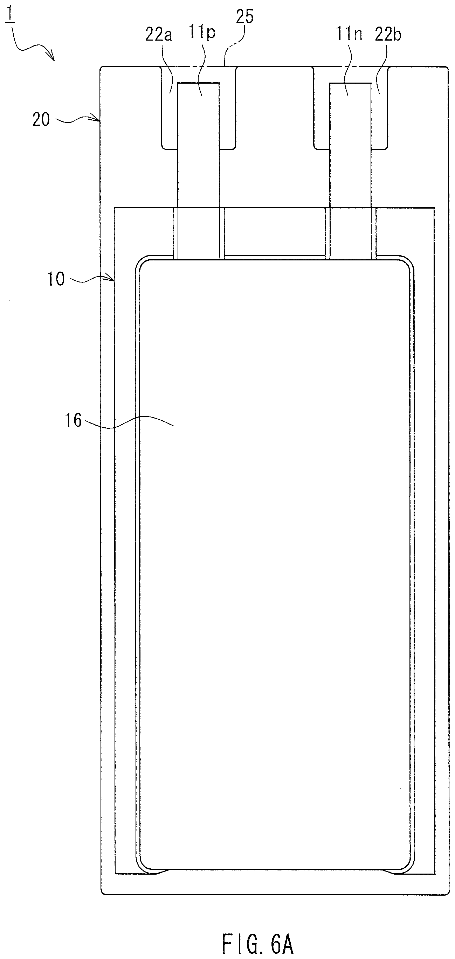

The shape in a plan view of the plates 20 is not limited to the above embodiment as well. For example, as shown in FIG. 6A, the upper edge of the plate 20 may be formed to have a substantially W shape by forming two cut-outs 22a and 22b only in regions that respectively oppose the positive electrode tab 11p and the negative electrode tab 11n of the battery cell 10.

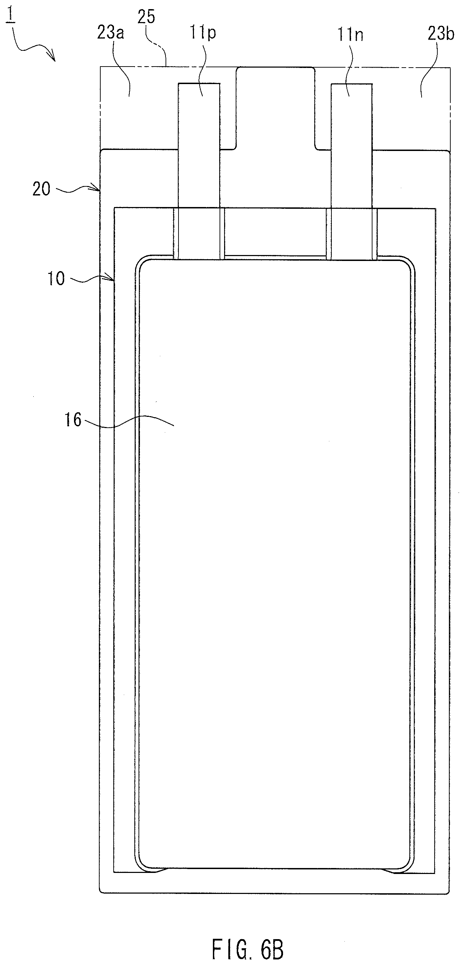

Alternatively, as shown in FIG. 6B, two cut-outs 23a and 23b may be formed in regions that respectively oppose the positive electrode tab 11p and the negative electrode tab 11n of the battery cell 10, the regions being located at the opposite ends of the upper short side of the plate 20.

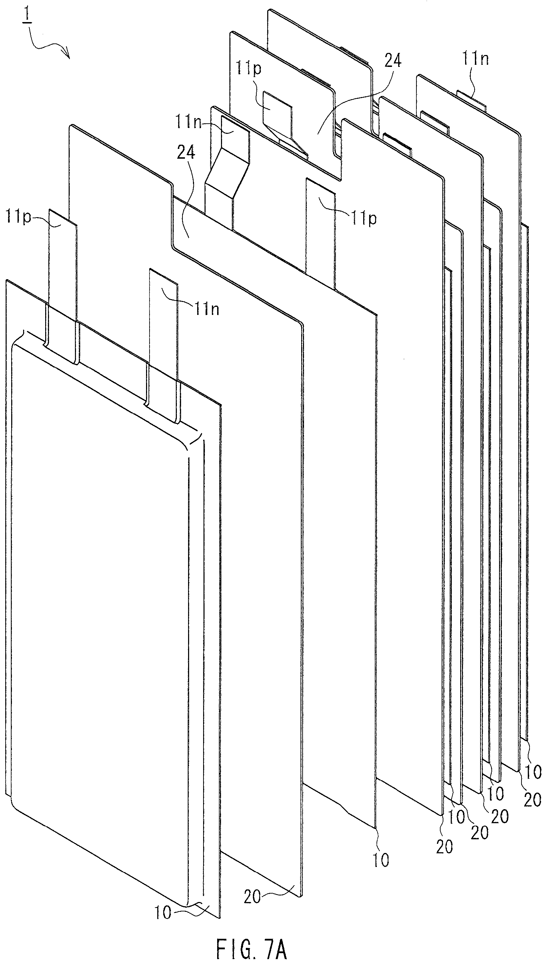

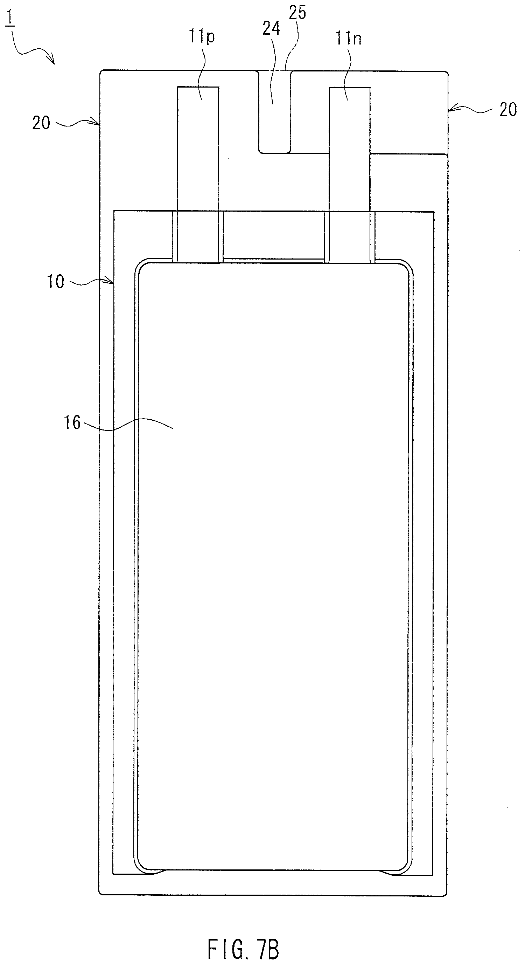

Alternatively, as shown in FIG. 7A, a cut-out 24 may be formed only in a region of each plate 20 where the positive electrode tabs 11p and the negative electrode tabs 11n of two adjacent battery cells 10 that are electrically connected oppose each other. In this example, every other plate 20 having a cut-out 24 formed only in one end portion of the upper short side thereof is flipped over and stacked to the battery cell 10. FIG. 7B is a front view of a battery stack 1 formed in the above-described manner.

In order to electrically connect the positive electrode tab 11p and the negative electrode tab 11n between two battery cells 10 that are adjacent to each other with a plate 20 interposed therebetween, instead of forming a cut-out by partially cutting off a side of the plate 20, a through hole may be formed in the plate 20.

A so-called chamfer may be formed by linearly or arcuately cutting off a corner of the plate 20. Also, a through hole may be formed in the plate 20 as necessary.

Measures may be taken to prevent a short circuit between the positive electrode tab 11p and the negative electrode tab 11n that are not connected but oppose each other in the stacked direction. There is no particular limitation on the measures for preventing a short circuit, and for example, a known method such as covering, with an insulating material, the positive electrode tab 11p and the negative electrode tab 11n that are connected to each other can be used.

The number of battery cells and the number of plates constituting the battery stack are not limited to those of the above embodiment, and can be set to any number.

There is no particular limitation on the application field of the present invention, and the present invention can be widely used as a battery stack for use in a power source for various moving devices such as automobiles, motorbikes and electric power-assisted bicycles, personal digital assistant devices, and uninterruptible power supply (UPS) apparatuses. Particularly, the present invention can be preferably used as a battery stack mounted in various moving devices that easily receive impact and vibrations.

## Claims

1. A battery stack (1) in which a plurality of laminar battery cells (10) and a plurality of plates (20) are alternately disposed and stacked one on top of another,
wherein each of the plurality of battery cells (10) has a front surface on which a rectangular region (16) corresponding to a power generation element is protruded from a sealed region where a laminate sheet (13) is sealed to form an outer sheath of the power generation element, and a back surface that is a substantially flat surface,
each plate (20) has a substantially rectangular shape as a whole, and one cut-out (21; 24) is formed in one side of the plate (20),
the substantially rectangular shape of the plate (20) also internally includes the battery cell (10) having a positive electrode tab (11p) and a negative electrode tab (11n) that are drawn out from the battery cell (10), when the battery stack (1) is viewed in a stacked direction, and
the opposing positive electrode tab (11p) and the negative electrode tab (11n) are electrically connected via the cut-out (21) between the battery cells (10) that are adjacent to each other with the plate (20) interposed therebetween,
**characterized in that** each of the plurality of battery cells (10) is fixed to an adjacent plate (20) so that the rectangular region (16) of the front surface is fixed to a plate (20) that faces the front surface by placing a double-sided adhesive tape or adhesive there between, and the substantially flat surface of the back surface is fixed to a plate (20) that faces the back surface by placing a double-sided adhesive tape or adhesive therebetween.

2. The battery stack according to claim 1, wherein each side of the substantially rectangular shape extends 1 mm or more from the battery cell including the positive electrode tab and the negative electrode tab.

3. The battery stack according to claim 1 or 2, wherein the cut-out (24) is formed in one end portion of the side of the plate (20).

## Patentansprüche

1. Batteriestapel (1), bei welchem mehrere Schichtbatteriezellen (10) und mehrere Platten (20) abwechselnd angeordnet und aufeinander gestapelt sind, wobei jede der mehreren Batteriezellen (10) eine Vorderfläche aufweist, an der ein rechteckiger Bereich (16), der einem Strom-erzeugenden Element entspricht, von einem Dichtbereich hervorsteht, in dem ein Laminatbogen (13) dichtet, zum Bilden einer äußeren Hülle des Stromerzeugungselements, und eine Rückfläche, die eine im Wesentlichen flache Oberfläche ist,
jede Platte (20) im Ganzen eine im Wesentlichen rechteckige Gestalt aufweist, und ein Ausschnitt (21; 24) in einer Seite der Platte (20) gebildet ist,
die im Wesentliche rechteckige Gestalt der Platte (20) intern auch die Batteriezelle (10) mit einem positiven Elektrodenanschluss (11p) und einem negativen Elektrodenanschluss (11n) beinhaltet, die sich von der Batteriezelle (10) weg erstrecken, wenn der Batteriestapel (1) in der Stapelrichtung betrachtet wird, und der positive Elektrodenanschluss (11p) und der negative Elektrodenanschluss (11n), die einander gegenüberliegen, elektrisch über den Ausschnitt (21) zwischen den einander benachbarten Batteriezellen (10) mit der Platte (20) dazwischen verbunden sind,
**dadurch gekennzeichnet, dass**
jede der mehreren Batteriezellen (10) an eine benachbarten Platte (20) derart befestigt ist, dass der rechteckige Bereich (16) der Vorderfläche an einer Platte (20) befestigt ist, die der Vorderfläche zugewandt ist, indem ein doppelseitiges Klebeband oder Klebstoff dazwischen angeordnet wird, und die im Wesentlichen flache Oberfläche der Rückfläche an einer Platte (20) befestigt ist, die der Rückfläche zugewandt ist, indem ein doppelseitiges Klebeband oder Klebstoff dazwischen angeordnet wird.

2. Batteriestapel gemäß Anspruch 1, wobei jede Seite der im Wesentlichen rechteckigen Form um 1 mm oder mehr von der Batteriezelle einschließlich des positiven Elektrodenanschlusses und des negativen Elektrodenanschlusses hervorsteht.

3. Batteriestapel gemäß Anspruch 1 oder 2, wobei der Ausschnitt (24) in einem Endbereich der Seite der Platte (20) gebildet ist.

## Revendications

1. Empilement de batterie (1) dans lequel une pluralité de cellules de batterie laminaires (10) et une pluralité de plaques (20) sont disposées de manière alternée et empilées les unes au-dessus des autres,
dans lequel chacune de la pluralité de cellules de batterie (10) a une surface avant sur laquelle une zone rectangulaire (16) correspondant un élément de production d'énergie fait saillie d'une zone scellée où une feuille stratifiée (13) est scellée pour former une enveloppe extérieure de l'élément de production d'énergie, et une surface arrière qui est une surface sensiblement plane,
chaque plaque (20) a une forme sensiblement rectangulaire dans l'ensemble, et une découpe (21 ; 24) est formée dans un côté de la plaque (20),
la forme sensiblement rectangulaire de la plaque (20) inclut également intérieurement la cellule de batterie (10) ayant une languette d'électrode positive (11p) et une languette d'électrode négative (11n) qui sont tirées de la cellule de batterie (10), lorsque la pile de batterie (1) est vue dans une direction empilée, et
la languette d'électrode positive opposée (11p) et la languette d'électrode négative (11n) sont électriquement reliées via la découpe (21) entre les cellules de batterie (10) qui sont adjacentes les unes aux autres avec la plaque (20) interposée entre celles-ci,
**caractérisé en ce que** chacune de la pluralité de cellules de batterie (10) est fixée à une plaque (20) adjacente de sorte que la zone rectangulaire (16) de la surface avant soit fixée à une plaque (20) qui fait face à la surface avant en plaçant un ruban adhésif double face ou un adhésif entre celles-ci, et la surface sensiblement plane de la surface arrière est fixée à une plaque (20) qui fait face à la surface arrière en plaçant un ruban adhésif double face ou un adhésif entre celles-ci.

2. Empilement de batterie selon la revendication 1, dans lequel chaque côté de la forme sensiblement rectangulaire s'étend de 1 mm ou plus à partir de la cellule de batterie incluant la languette d'électrode positive et la languette d'électrode négative.

3. Empilement de batterie selon la revendication 1 ou 2, dans lequel la découpe (24) est formée dans une partie d'extrémité du côté de la plaque (20).
